# EUROPEAN PATENT APPLICATION

(11) **EP 2 407 882 A1**
(43) Date of publication of application: **18.01.2012**
(21) Application number: 10750592.7
(22) Date of filing: 11.03.2010
(51) Int. Cl.: G06F 9/54

(54) **DEVICE AND METHOD FOR RECORDING/REPRODUCING**

(30) Priority: 11.03.2009 JP 2009057685
(71) Applicant: Panasonic Corporation, Kadoma-shi Osaka 571-8501 (JP)
(72) Inventor: HAMABE, Masashi, Osaka-shi, Osaka 540-6207 (JP); TOMODA, Masaaki, Osaka-shi, Osaka 540-6207 (JP)
(74) Representative: Eisenführ, Speiser & Partner
(86) International application number: PCT/JP2010/001729
(87) International publication number: WO 2010/103835

(57) **Abstract**

At a startup of an audio recording and playback apparatus (100) and after executing a function other than a recording function, a controller (4) reads out a recording program (91b) stored in the nonvolatile memory (9), stores the recording program into the RAM (3), and puts the audio recording and playback apparatus (100) into a stop state. Further, when a recording key (10b) is turned on, the controller (4) executes the recording program (91b) stored in the RAM (3).

## Description

### TECHNICAL FIELD

The present invention relates to recording and playback apparatuses such as video recorders, digital still cameras and IC (Integrated Circuit) recorders, and relates to a recording and playback method for the recording and playback apparatuses. In particular, the present invention relates to a recording and playback apparatus and a recording and playback method for the recording and playback apparatus, where the recording and playback apparatus includes controller means such as a microcomputer for controlling the operation of the entire recording and playback apparatus, and storage means such as a nonvolatile memory for storing data to be recorded and played back.

### BACKGROUND ART

In recent years, according to improvements in the degree of integration of semiconductor integrated circuits, a system LSI (Large Scaled Integrated Circuit), in which a plurality of principal electronic circuits of the recording and playback apparatus are consolidated in one chip, has been used in the recording and playback apparatus. For example, a CPU (Central Processing Unit), a ROM (Read Only Memory) that stores a program for controlling the operation of the entire audio recording and playback apparatus, a RAM (Random Access Memory), an interface circuit for controlling connections with external equipment, peripheral circuits, and a codec for performing compression and decompression of audio data are mounted in a system LSI for the audio recording and playback apparatus. By adopting such a system LSI, a size reduction, power saving and a cost reduction of a portable recording and playback apparatus such as an audio recording and playback apparatus are achieved. However, in a portable recording and playback apparatus that requires further cost and size reductions, the capacity of the ROM of the system LSI tends to be reduced, and the size of the program for controlling the operation of the recording and playback apparatus has been limited by restrictions on the system in terms of the capacity of ROM.

In order to solve such a problem, for example, the Patent Document 1 discloses a program control system in an apparatus that functions by a program stored in the memory. The program control system of the Patent Document 1 is characterized by including a memory for storing unit function programs divided individually in functional units, a program control part for storing a desired unit function program, and a load control part that loads the desired unit function program into the memory by instructions based on a program determination of the program control part. Therefore, the program control system described in the Patent Document 1 divides a program into the unit function programs capable of individually operating, loads and control each of the unit function programs when required. Accordingly, it is possible to expand the storage area of the program apparently without limitations.

### CITATION LIST

### PATENT DOCUMENT

Patent Document 1: Japanese patent laid-open publication No. JP 60-68436 A.

### SUMMARY OF INVENTION

### TECHNICAL PROBLEM

According to the program control system described in the Patent Document 1, the operation of the apparatus can be controlled by loading only a required unit function program to the memory, however, there has been such a problem that it becomes impossible to control the operation of the apparatus when a storage region for storing the entire program divided into unit function programs cannot be secured in the first place.

It is an object of the present invention to provide a recording and playback apparatus and a recording and playback method each capable of solving the above-mentioned problems, and capable of controlling the operation of the recording and playback apparatus without depending on the capacity of the storage means that stores the program for controlling the operation of the recording and playback apparatus, and capable of further reducing the capacity of the storage means in the recording and playback apparatus as compared with that of the prior art.

### SOLUTION TO PROBLEM

A recording and playback apparatus according to the first invention has a plurality of functions including a recording function. The recording and playback apparatus includes first storage means for previously storing a plurality of function programs for executing the plurality of functions, respectively, second storage means for storing one function program for executing one function selected from the plurality of functions, and controller means for executing a selected function by executing the function program stored in the second storage means. The controller means controls a function program for executing the recording function to be stored into the second storage means in a stop state of the recording and playback apparatus.

In the above-mentioned recording and playback apparatus, at a startup of the recording and playback apparatus, the controller means reads out the function program for executing the recording function from the first storage means, stores a read-out function program into the second storage means, and puts the recording and playback apparatus into the stop state.

In addition, in the above-mentioned recording and playback apparatus, after terminating a function program for executing a function other than the recording function, the controller means erases the function program stored in the second storage means, reads out the function program for executing the recording function from the first storage means, stores a read-out function program into the second storage means, and puts the recording and playback apparatus into the stop state.

Further, in the above-mentioned recording and playback apparatus, when the recording function is selected in the stop state, the controller means executes the function program for executing the recording function stored in the second storage means without reading out the function program for executing the recording function stored in the first storage means.

Still further, in the above-mentioned recording and playback apparatus, when a function other than the recording function is selected in the stop state, the controller means erases the function program for executing the recording function stored in the second storage means, reads out the function program for executing a selected function from the first storage means, stores a read-out function program into the second storage means, and executes the function program stored in the second storage means.

A recording and playback method according to the second invention is a recording and playback method for a recording and playback apparatus having a plurality of functions including a recording function. The recording and playback method includes a step of previously storing a plurality of function programs for executing the plurality of functions, respectively, into first storage means, a step of storing one function program for executing one function selected from the plurality of functions into second storage means, and a control step of executing a selected function by executing the function program stored in the second storage means. The control step includes controlling a function program for executing the recording function to be stored into the second storage means in a stop state of the recording and playback apparatus.

In the above-mentioned recording and playback method, at a startup of the recording and playback apparatus, the control step includes reading out the function program for executing the recording function from the first storage means, storing a read-out function program into the second storage means, and putting the recording and playback apparatus into the stop state.

In addition, in the above-mentioned recording and playback method, after terminating a function program for executing a function other than the recording function, the control step includes erasing the function program stored in the second storage means, reading out the function program for executing the recording function from the first storage means, storing a read-out function program into the second storage means, and putting the recording and playback apparatus into the stop state.

Further, in the above-mentioned recording and playback method, when the recording function is selected in the stop state, the control step includes executing the function program for executing the recording function stored in the second storage means without reading out the function program for executing the recording function stored in the first storage means.

Still further, in the above-mentioned recording and playback method, when a function other than the recording function is selected in the stop state, the control step includes erasing the function program for executing the recording function stored in the second storage means, reading out the function program for executing a selected function from the first storage means, storing a read-out function program into the second storage means, and executing the function program stored in the second storage means.

### ADVANTAGEOUS EFFECTS OF INVENTION

According to the recording and playback apparatus and the recording and playback method of the present invention, it is controlled so that the function program for executing the recording function is stored into the second storage means in the stop state of the recording and playback apparatus. Therefore, it is possible to execute the recording function by executing the function program for executing the recording function stored in the second storage means without reading out the function program for executing the recording function from the first storage means. For the above reasons, the time until the execution of the recording function can be suppressed to the minimum. In addition, since the second storage means stores only one function program, the capacity of the second storage means can be reduced to a size of function program that has the largest size of the plurality of function programs, and this allows the recording and playback apparatus to achieve a size reduction, power saving and a cost reduction as compared with the prior art.

### BRIEF DESCRIPTION OF DRAWINGS

Fig. 1 is a block diagram showing a configuration of an audio recording and playback apparatus 100 according to a preferred embodiment of the present invention;
Fig. 2 is a block diagram showing a hierarchical structure of a software program executed by a controller 4 of Fig. 1;
Fig. 3 is a flow chart of the first part of the audio recording and playback process executed by the controller 4 of Fig. 1;
Fig. 4 is a flow chart of the second part of the audio recording and playback process executed by the controller 4 of Fig. 1;
Fig. 5 is a flow chart of a recording process executed at step S 12 of Fig. 4;
Fig. 6 is a flow chart of a playback process executed at step S 14 of Fig. 4;
Fig. 7 is a flow chart of other key input processes executed at step S 17 of Fig. 4; and
Fig. 8 is a block diagram showing a ROM 2, a RAM 3 and a nonvolatile memory 9 when a recording program 91b is executed by the controller 4 of Fig. 1.

### DESCRIPTION OF EMBODIMENTS

Preferred embodiments according to the present invention will be described below with reference to the attached drawings. Components similar to each other are denoted by the same reference numerals and will not be described herein in detail.

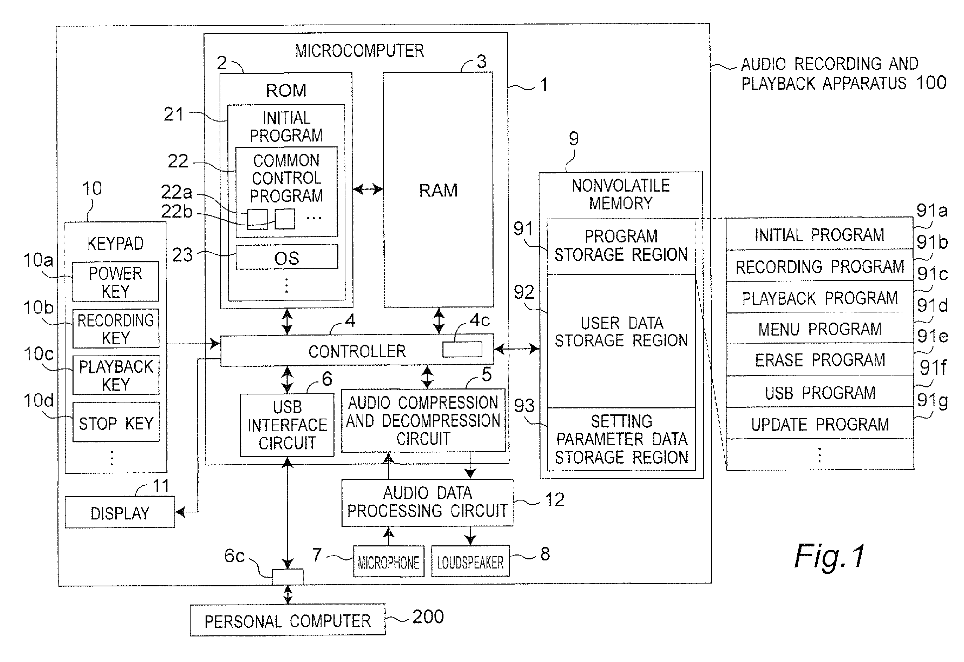

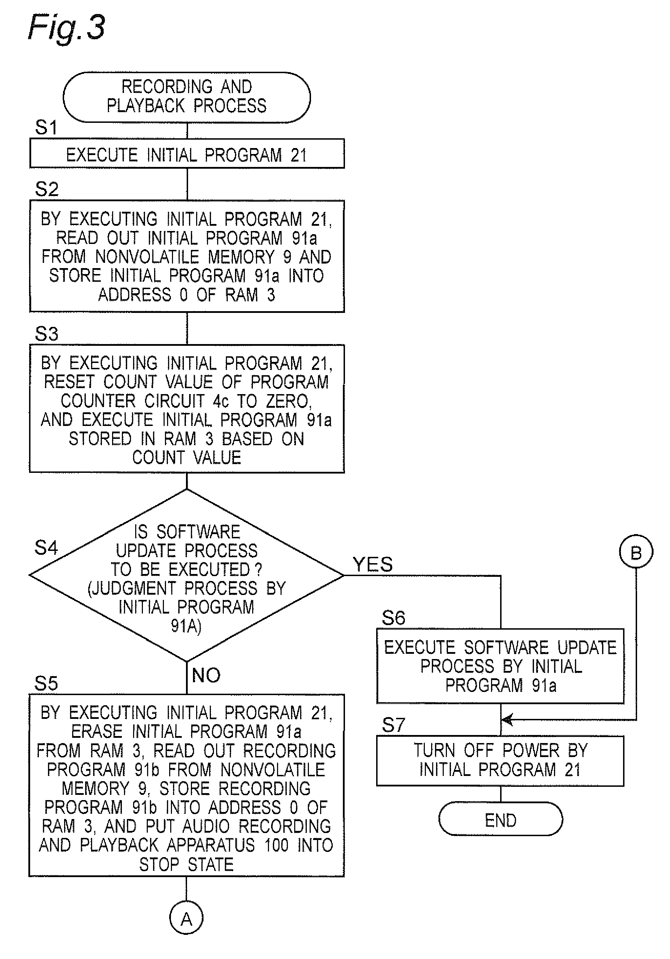

Fig. 1 is a block diagram showing a configuration of an audio recording and playback apparatus 100 according to a preferred embodiment of the present invention. Referring to Fig. 1, the audio recording and playback apparatus 100 is configured to include a microcomputer 1, a nonvolatile memory 9 of a NAND type flash memory, a USB (Universal Serial Bus) connector 6c, a microphone 7, a loudspeaker 8, a keypad 10, a display 11, and an audio data processing circuit 12 of a codec. The microcomputer is a system LSI for controlling the operation of the entire audio recording and playback apparatus 100. Further, the microcomputer 1 is configured to include a controller 4, a ROM 2, a RAM (Random Access Memory) 3, a USB interface circuit 6, and an audio compression and decompression circuit 5. In addition, the nonvolatile memory 9 is configured to include a program storage region 91, a user data storage region 92, and a setting parameter data storage region 93. It is noted that the audio recording and playback apparatus 100 is connected to a personal computer 200 via the USB connector 6c at the time of software update process described in detail later with reference to Fig. 3.

As described in detail later, the audio recording and playback apparatus 100 of the present preferred embodiment has the nonvolatile memory 9 for previously storing a plurality of function programs 91a to 91g for executing a plurality of functions including a recording function, respectively, the RAM 3 for storing one function program for executing one function selected from the plurality of functions, and the controller 4 for executing a selected function by executing the function program stored in the RAM 3. The controller 4 is characterized by controlling the recording program 91b of the function program for executing the recording function to be stored in the RAM 3 in the stop state of the audio recording and playback apparatus 100.

Referring to Fig. 1, the controller 4 is concretely configured to include circuits of the CPU, a program counter circuit 4c, a timer counter circuit and so on, and connected to the ROM 2, RAM 3, USB interface circuit 6, audio compression and decompression circuit 5, keypad 10, display 11, and nonvolatile memory 9 so as to control them and to execute the function programs 91a to 91g such as the recording program 91b of audio data as described in detail later. In addition, the ROM 2 is a masked ROM for previously storing the software program that is required for the operation of the audio recording and playback apparatus 100 and is executed by the controller 4. Concretely speaking, the ROM 2 previously stores an initial program 21 that is an initial program loader. In this case, the initial program 21 includes a common control program 22 and an OS (Operating System) 23 that is a fundamental software, and is read out by the controller 4 to execute the OS 23 at a startup when the power of the audio recording and playback apparatus 100 is turned on and the audio recording and playback apparatus 100 is reset. In addition, the common control program 22 includes a plurality of common control programs 22a, 22b, ..., which are executed in common when each function of the audio recording and playback apparatus 100 is executed. It is noted that the capacity of the ROM 2 is set to several hundreds of kilobytes, for example.

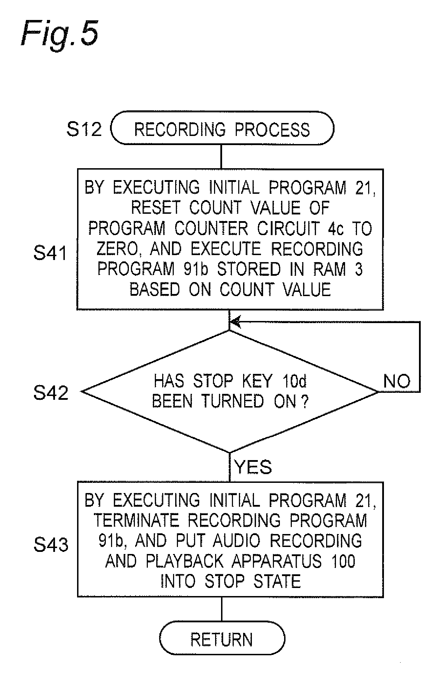

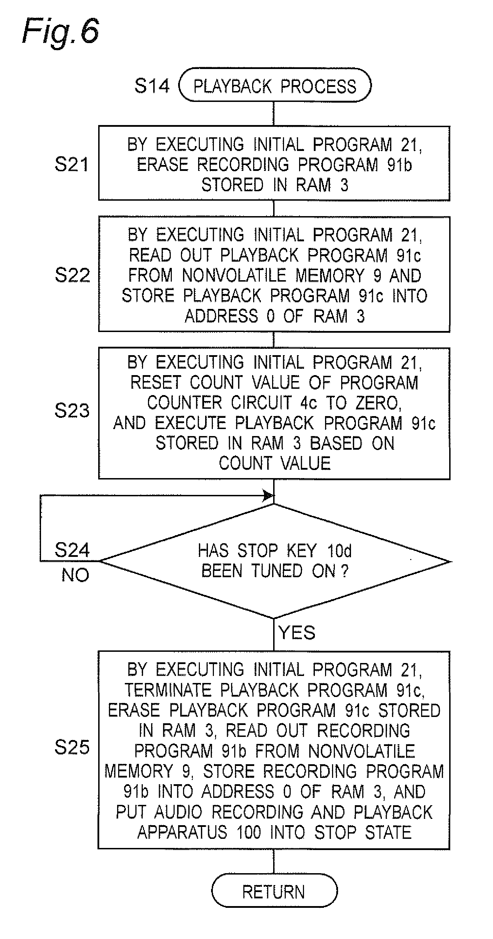

In addition, referring to Fig. 1, the RAM 3 is configured to include an SRAM (Static RAM), a DRAM (Dynamic RAM), an SDRAM (Synchronous DRAM) or the like, and is used as a working area of the controller 4. As described in detail later, the RAM 3 stores a program read-out from the nonvolatile memory 9 and temporary data generated when the program is executed. The capacity of the RAM 3 is set to 160 kilobytes, for example. In addition, the audio data processing circuit 12 converts analog audio data inputted via the microphone 7 into digital audio data, and outputs a converted digital audio data to the audio compression and decompression circuit 5 at the time of a recording process of Fig. 5. Then, the audio compression and decompression circuit 5 compresses the converted digital audio data according to MP3 (MPEG-1 Audio Layer-III), and stores a compressed audio data after the compression into the user data storage region 92 of the nonvolatile memory 9. Further, the audio compression and decompression circuit 5 reads out the compressed audio data from the user data storage region 92 of the nonvolatile memory 9, decompresses compressed audio data according to the MP3, and outputs decompressed audio data to the audio data processing circuit 12 at the time of a playback process of Fig. 6. The audio data processing circuit 12 converts decompressed digital audio data into analog audio data, amplifies the analog audio data, and outputs the same data from the loudspeaker 8. Still further, the USB interface circuit 6 executes an interfacing process with the personal computer 200 on a signal and data inputted from the controller 4, so as to generate a signal and data complying with USB, output the same signal and data to the personal computer 200 via the USB connector 6c. On the other hand, the USB interface circuit 6 receives a signal and data inputted from the personal computer 200 via the USB connector 6c, executes predetermined interfacing processes including signal conversion and protocol conversion on the same signal and data, and outputs the same signal and data to the controller 4.

Further, referring to Fig. 1, the keypad 10 is provided to input instruction commands from a user, and is configured to include a plurality of keys such as a power key 10a, a recording key 10b, a playback key 10c, and a stop key 10d. In addition, the display 11 displays an operating state and a menu screen of the audio recording and playback apparatus 100.

In addition, referring to Fig. 1, the program storage region 91 of the nonvolatile memory 9 stores the function programs 91a to 91g of the application software modularized for each of the functions to execute the plurality of functions such as the recording function and a playback function incorporated in the audio recording and playback apparatus 100. Each of the function programs 91a to 91g is read out by the controller 4 according to the function to be executed by the audio recording and playback apparatus 100, stored in the RAM 3, and then is executed. In the present preferred embodiment, the program storage region 91 previously stores the following function programs 91a to 91g:
(a) the function program 91a (also referred to as an initial program 91a hereinafter) for executing a software update function at the startup (at the time of power-on and at the time of reset) of the audio recording and playback apparatus 100;
(b) the function program 91b (also referred to as a recording program 91b hereinafter) for recording the compressed audio data into the user data storage region 92, and executing the recording function to control the operation of the audio recording and playback apparatus 100 in the stop state or stop mode thereof;
(c) the function program 91c (also referred to as a playback program 91c hereinafter) for executing the recording function to play back the compressed audio data stored in the user data storage region 92;
(d) the function program 91d (also referred to as a menu program 91d hereinafter) for executing a menu operation function;
(e) the function program 91e (also referred to as an erase program 91e hereinafter) for executing an erase function to erase the compressed audio data stored in the user data storage region 92;
(f) the function program 91f (also referred to as a USB program 91f hereinafter) for executing an USB connection function to connect the audio recording and playback apparatus 100 to the personal computer 200 by USB; and
(g) the function program 91g (also referred to as an update program 91g hereinafter) for obtaining newest function programs 91a to 91f, storing the same programs into the user data storage region 92, and setting an update flag in the setting parameter data storage region 93.

As described above, the audio recording and playback apparatus 100 has the plurality of functions such as the recording function and the playback function, and the plurality of functions correspond to a plurality of operation modes of the audio recording and playback apparatus 100, respectively. Concretely speaking, the recording function corresponds to a recording mode, and the playback function corresponds to a playback mode. By executing the function program corresponding to each operation mode (i.e., corresponding to each function) of the function programs 91a to 91g, the control flow of the audio recording and playback apparatus 100 proceeds or shifts to the operation mode.

In addition, referring to Fig. 1, the user data storage region 92 also stores the compressed audio data generated by the audio compression and decompression circuit 5, and further the newest function programs 91a to 91f at the software update time. Further, the setting parameter data storage region 93 stores setting parameter data for updating the respective function programs 91a to 91f in the program storage region 91. In this case, the setting parameter data includes version information of the function programs 91a to 91f and the update flag that represents whether or not to perform the software update process (See Fig. 3) to update the function programs 91a to 91f. The update flag is set when the update program 91g is executed according to instructions from the user and update software of the newest function programs 91a to 91f is stored into the user data storage region 92 from the personal computer 200 via USB. It is noted that the capacity of the entire nonvolatile memory 9 is set to two gigabytes, and the capacity of the program storage region 91 is set to a fixed capacity of two megabytes in the present preferred embodiment. In addition, the function programs 91a to 91g in the program storage region 91 are not compressed.

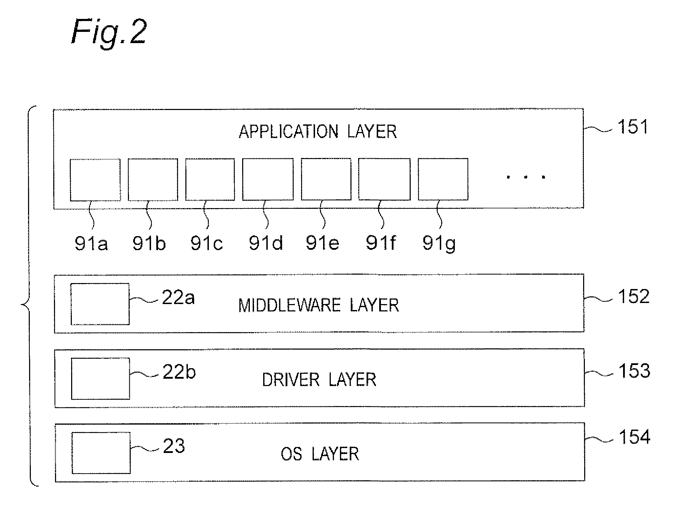

Fig. 2 is a block diagram showing a hierarchical structure of the programs of the software to be executed by the controller 4 of Fig. 1. Referring to Fig. 2, the software executed in the audio recording and playback apparatus 100 is configured to include four layers of an OS layer 154, a driver layer 153, a middleware layer 152 and an application layer 151. In this case, the OS layer 154 includes the OS 23. In addition, the driver layer 153 is provided between the OS layer 154 and the middleware layer 152, and includes software for directly controlling the operations of the hardware of the microphone 7, the loudspeaker 8, the keypad 10, the display 11 and so on to convert instructions from the OS 23 into instructions that do not depend on the hardware, and transmit the same instructions to the middleware layer 152. In addition, the middleware layer 152 is provided between the driver layer 153 and the application layer 151, and includes software for executing the operations that do not depend on the above-mentioned hardware, and library software for executing a function utilized in common by the software of the application layer. Further, the application layer 151 includes programs of the application software executed according to instruction commands from the user of the audio recording and playback apparatus 100.

Referring to Figs. 1 and 2, each of the function programs 91a to 91g is a software program of the application layer 151, and is stored in the program storage region 91 of the nonvolatile memory 9. In addition, the common control program 22 constituting the initial program 21 includes a common control program 22a of the middleware layer 152 and a common control program 22b of the driver layer 153, and is stored with the OS 23 in the ROM 2. The common control program 22b of the driver layer 153 includes a key driver to overwatch whether or not a key input has been made in the keypad 10 and which key has been turned on.

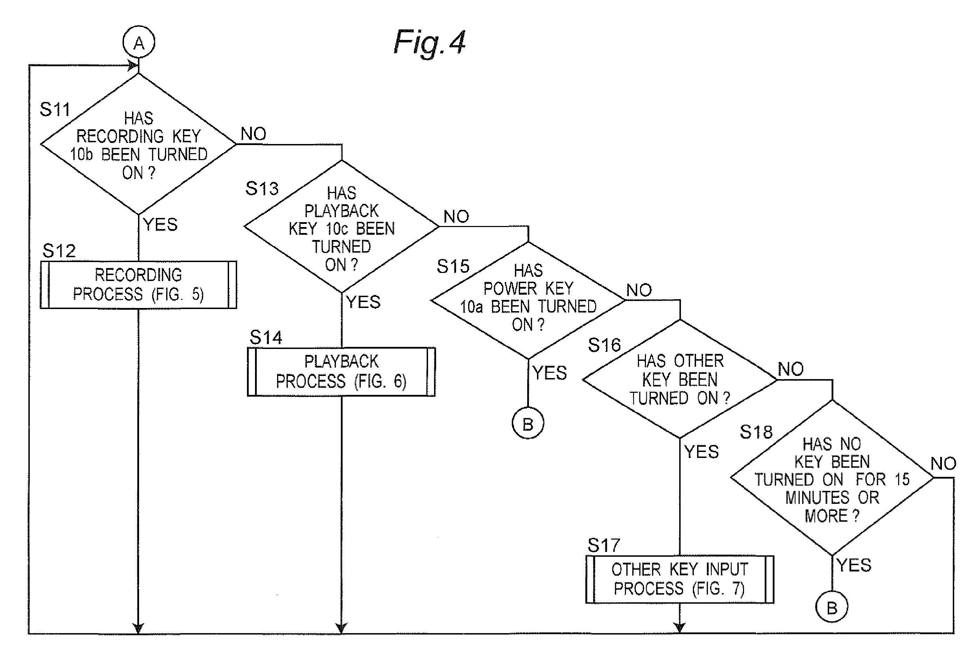

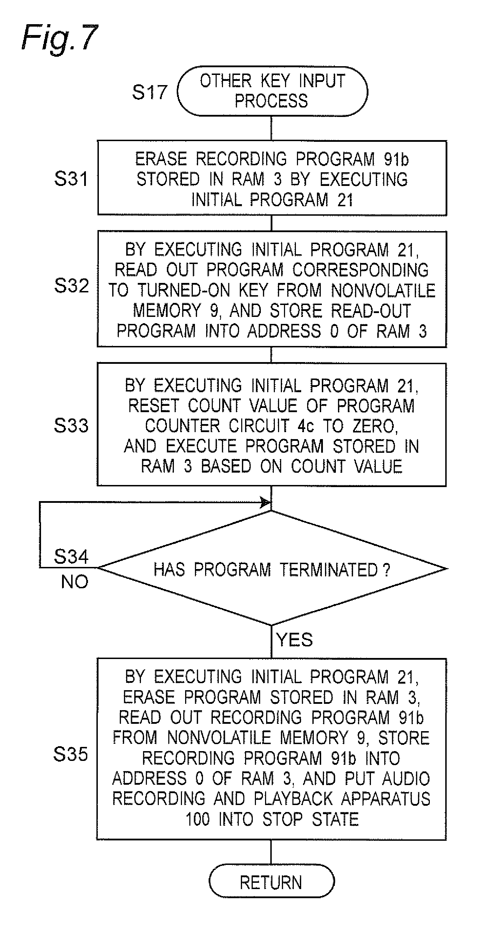

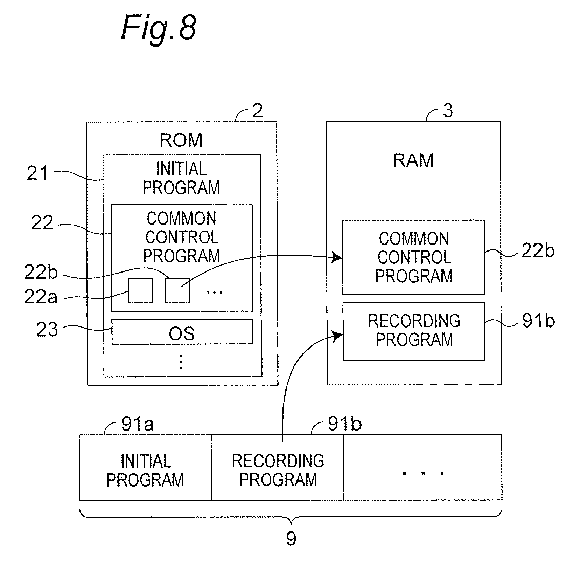

Next, operation of the audio recording and playback apparatus 100 is described with reference to Figs. 3 to 8. Figs. 3 and 4 are flow charts of an audio recording and playback process executed by the controller 4 of Fig. 1. Fig. 5 is a flow chart of a recording process executed at step S12 of Fig. 4, Fig. 6 is a flow chart of a playback process executed at step S 14 of Fig. 4, and Fig. 7 is a flow chart of an other key input process executed at step S17 of Fig. 4. Further, Fig. 8 is a block diagram showing the ROM 2, the RAM 3 and the nonvolatile memory 9 when the recording program 91b is executed by the controller 4 of Fig. 1.

Referring to Fig. 3, first of all, when the power of the audio recording and playback apparatus 100 is turned on and the power of the audio recording and playback apparatus 100 is started up, the controller 4 executes the initial program 21 at step S1. Then, at step S2, by executing the initial program 21, the controller reads out the initial program 91a from the nonvolatile memory 9, and stores the initial program 91a into an address 0 of the RAM 3. Next, at step S3, by executing the initial program 21, the controller 4 resets a count value of the program counter circuit 4c to zero, and executes the initial program 91a stored in the RAM 3 is executed based on the count value, and the control flow goes to step S4. At step S4, by executing the initial program 91a, it is judged whether or not to execute the software update process to update the function programs 91a to 91f stored in the program storage region 91. Concretely speaking, it is judged whether or not the update flag of the setting data parameter data storage region 93 is set. When the update flag is set, the control flow goes to step S6. When the update flag is not set, the initial program 91a is terminated, and the control flow goes to step S5. At step S6, the controller executes the software update process by executing the initial program 91a. In the software update process, the controller 4 detects that the program of the newest software, which has been taken in from the personal computer 200 according to the instructions from the user, is stored in the user data storage region 92 by the initial program 91a, and issues an update instruction. Then, the controller 4 reads out the program of updated newest software from the user data storage region 92, stores the same program into the program storage region 91 as the function programs 91a to 91f, and terminates the software update process. Subsequent to step S6, the controller 4 turns off the power of the audio recording and playback apparatus 100 by the initial program 21 at step S7, and terminates the audio recording and playback process.

On the other hand, when it is judged at step S4 of Fig. 3 that the software update process is not executed, by executing the initial program 21, the controller 4 erases the initial program 91a from the RAM 3, reading out the recording program 91b from the nonvolatile memory 9, storing the recording program 91b into the address 0 of the RAM 3, and putting the audio recording and playback apparatus 100 into the stop state. In this case, the stop state is an input standby state or an input standby mode in which a key input from the keypad 10 is awaited.

Subsequent to step S5, at step S11 of Fig. 4, it is judged by the initial program 21 whether or not the recording key 10b has been turned on. If YES at step S11, then the control flow goes to the recording process of step S12. On the other hand, if NO at step S11, then the control flow goes to S 13. Further, at step S13, it is judged by the initial program 21 whether or not the playback key 10c has been turned on. If YES at step S13, then the control flow goes to the playback process of step S14. If NO at step S13, then the control flow goes to step S15. Further, at step S15, it is judged by the initial program 21 whether or not the power key 10a has been turned on. If YES at step S15, then the control flow returns to step S7. If NO at step S15, then the control flow goes to step S16. Then, at step S16, it is judged by the initial program 21 whether or not the other key except for the recording key 10b, the playback key 10c, the power key 10a and the stop key 10d has been turned on. If YES at step S16, then the control flow goes to other key input process of step S17. If NO at step S16, then the control flow goes to step S 18. At step S 18, it is judged by the initial program 21 whether or not no key has been turned on for 15 minutes or more. If YES at step S18, then the control flow returns to step S7. If NO at step S18, then the control flow returns to step S11.

Referring to Fig. 4, the recording process of Fig. 5 is executed at step S12. First of all, at step S41 of the recording process, by executing the initial program 21, the controller 4 resets the count value of the program counter circuit 4c to zero, and executes the recording program 91b stored in the RAM 3 based on the count value, and the control flow goes to step S42. In this case, by executing the recording program 91b, a predetermined recording starting process for starting recording, a recording setting process during the recording such as setting of the sensitivity of the microphone 7, and a predetermined recording terminating process are executed. At this time, as shown in Fig. 8, required common control program 22a or 22b is read out from the ROM 2 at any time by the recording program 91b in the recording starting process, the recording setting process and the recording terminating process. The read-out common control program 22a or 22b is stored in the RAM 3, and is executed. In the recording process of Fig. 5, the audio data processing circuit 12 is controlled to convert the analog audio data inputted via the microphone 7 into digital audio data, output the digital audio data to the audio compression and decompression circuit 5, compress converted digital audio data according to MP3, and store the compressed audio data after the compression into the user data storage region 98 of the nonvolatile memory 9. Next, subsequent to step S41, it is judged by the recording program 91b at step S42 whether or not the stop key 10d has been turned on. If YES at step S42, then the control flow goes to step S43. If NO at step S42, then the judgment process of step S42 is periodically repeated at predetermined time intervals. Then, at step S43, by executing the initial program 21, the controller 4 terminates the recording program 91b to put the audio recording and playback apparatus 100 into the stop state, and the control flow returns to step S 11 of the audio recording and playback process.

Referring to Fig. 4, the playback process of Fig. 6 is executed at step S16. In the playback process, first of all, at step S21, by executing the initial program 21, the controller 4 erases the recording program 91b stored in the RAM 3, and the control flow goes to step S22. When the process of step S21 is executed after the recording process of Fig. 5 is executed, the common control program 22b stored in the RAM 3 at the time of executing the recording program 91b is also erased at step S21. Next, at step S22, by executing the initial program 21, the controller 4 read out the playback program 91c from the nonvolatile memory 9, and stores the playback program 91c into the address 0 of the RAM 3. Then, at step S23, by executing the initial program 21, the controller 4 resets the count value of the program counter circuit 4c to zero, and executes the playback program 91c stored in the RAM 3 based on the count value, and the control flow goes to step S24. In this case, by executing the playback program 91c, a predetermined playback starting process for starting playback, a playback setting process during the playback such as the setting of the loudspeaker 8, and a predetermined playback terminating process for terminating the playback are executed. At this time, a required common control program 22a or 22b is read out from the ROM 2 by the playback program 91c at any time in the playback starting process, the playback setting process and the playback terminating process. The read-out common control program 22a or 22b is stored into the RAM 3, and executed. The audio compression and decompression circuit 5 is controlled to read out the compressed audio data from the user data storage region 98 of the nonvolatile memory 9 at the time of the playback process of Fig. 6, decompress the same data according to MP3, and output resultant data to the audio data processing circuit 12. The audio data processing circuit 12 is controlled to convert the decompressed digital audio data into analog audio data, amplify the analog audio data, and output resultant audio data from the loudspeaker 8. At step S24, it is judged by the playback program 91c whether or not the stop key 10d has been turned on. If YES at step S24, the control flow goes to step S25. If NO at step A24, the judgment process of step S24 is periodically repeated at predetermined time intervals. Then, at step S25, by executing the initial program 21, the controller 4 terminates the playback program 91c, and erases the playback program 91c stored in the RAM 3 and the common control program 22a or 22b. Then, the controller reads out the recording program 91b from the nonvolatile memory 9, and stores the recording program 91b into the address 0 of the RAM 3, and puts the audio recording and playback apparatus 100 into the stop state. Then, the control flow returns to step S11 of the audio recording and playback process.

In addition, other key input process of Fig. 7 is executed at step S17 of Fig. 4. In other key input process, first of all, at step S31, by executing the initial program 21, the controller 4 erases the recording program 91b stored in the RAM 3, and the control flow goes to step S32. When the process of step S31 is executed after the execution of the recording process of Fig. 5, the common control program 22b stored in the RAM 3 at the time of executing the recording program 91b is also erased at step S31. At step S32, by executing the initial program 21, the controller 4 reads out a program corresponding to a turned-on key from the nonvolatile memory 9, and stores a read-out program into the address 0 of the RAM 3. In this case, the "program corresponding to a turned-on key" is a function program other than the initial program 91a and the recording program 91b among the function programs stored in the program storage region 91 as exemplified by the menu program 91d, the erase program 91e or the like of Fig. 1. At step S33, the common control program 22a or 22b required for other key input process during execution is read out from the ROM 2 at any time, stored into the RAM 3, and executed. Then, at step S33, by executing the initial program 21, the controller 4 resets the count value of the program counter circuit 4c to zero, and execute the program stored in the RAM 3 based on the count value, and the control flow goes to step S34. At step S34, it is judged by the initial program 21 whether or not the program is terminated. If YES at step S34, then the control flow goes to step S35. If NO at step S34, then the judgment process of step S34 is repeated. Then, at step S35, by executing the initial program 21, the controller 4 erases the program stored in the RAM 3 and the common control program 22a or 22b. Then, the recording program 91b is read out from the nonvolatile memory 9, and stored into the address 0 of the RAM 3 to put the audio recording and playback apparatus 100 into the stop state, and the control flow returns to step S11 of the audio recording and playback process.

The audio recording and playback apparatus according to the prior art has had the function programs 91a to 91g stored in the ROM 2 of the microcomputer 1. However, in recent years, portable audio recording and playback apparatuses require further cost and size reductions of the apparatuses, and there is a tendency that the capacity of the ROM 2 is reduced down to several hundreds of kilobytes. On the other hand, the function programs 91a to 91g have a size of 600 to 700 kilobytes in total, and therefore, it has become difficult to store the whole function programs 91a to 91g in the ROM 2. According to the present preferred embodiment, the function programs 91a to 91g are stored in the nonvolatile memory 9, and therefore, each of the function programs 91a to 91g can be executed without depending on the capacity of the ROM 2. In this case, the capacity of the nonvolatile memory 9 is generally set to several gigabytes, and therefore, the capacity of the user data storage region 92 is not substantially reduced even if the function programs 91a to 91g are stored in the nonvolatile memory 9. Further, the function programs 91a to 91g are modularized for each function of the audio recording and playback apparatus 100. The RAM 3 stores only the recording program 91b in the stop state or stores only one function program corresponding to the function to be executed when the function of the recording function, the playback function or the like is executed. Therefore, since the RAM 3 stores only one function program, the capacity of the RAM 3 can be reduced down to the size of the function program that has the largest size of the plurality of function programs stored in the program storage region 91, and this allows the audio recording and playback apparatus 100 to achieve a further reduced size, power saving and a cost reduction as compared with the prior art.

In addition, according to the audio recording and playback process of the present preferred embodiment, when the power of the audio recording and playback apparatus 100 is turned on, by executing the initial program 21 in a case where the software update process is not executed, the initial program 91 a is erased from the RAM 3, and the recording program 91b is read out from the nonvolatile memory 9 and stored in the RAM 3 to put the audio recording and playback apparatus 100 into the stop state (See step S5 of Fig. 3). In addition, by executing the initial program 21 at the time of terminating the playback process (Fig. 6) and other key input process (Fig. 7), the program stored in the RAM 3 for the process to be terminated is erased. Then, the recording program 91b is read out from the nonvolatile memory 9, and stored into the address 0 of the RAM 3, and the audio recording and playback apparatus 100 is put into the stop state. Therefore, in the stop state immediately after the startup of the audio recording and playback apparatus 100 and the stop state after the termination of a process other than the recording process, the recording program 91b is consistently stored in the RAM 3. Therefore, the recording process can be started without performing erase of the program stored in the RAM 3 or read of the recording program 91b from the nonvolatile memory 9 at the time of starting the recording process. Therefore, time from an input of the recording key 10b to the start of the recording process can be suppressed to the minimum, allowing the audio data to be prevented from being missed. That is, the audio recording and playback process of the present preferred embodiment exhibits action and advantageous effects that the audio data can be prevented from being missed in the "recording function" that is the most important function of the audio recording and playback apparatus 100.

In the present preferred embodiment, the software programs of the middleware layer 152, the driver layer 153 and the OS layer 154 were stored in the ROM 2, however, the present invention is not limited to this. The programs of the middleware layer 152, the driver layer 153 or the OS layer 154 may be partially stored in the program storage region 91. For example, since the ROM 2 is a masked ROM in the present preferred embodiment, the software cannot be updated even if a trouble is found in the software programs of the middleware layer 152, the driver layer 153 or the OS layer 154 stored in the ROM 2. In such a case, it is acceptable to store a correction program for dissolving the trouble (e.g., the software program of the middleware layer 152) into the program storage region 91 and to execute the correction program without executing the software program where the trouble has been found in the ROM 2.

In addition, the ROM 2 is configured to include the masked ROM incapable of rewriting and erasing the data stored therein in the present preferred embodiment., however, the present invention is not limited to this, and the ROM 2 may be configure by a PROM (Programmable ROM) provided with a flash memory capable of rewriting and erasing the data. In this case, it is acceptable to update also the initial program 21 in addition to the function programs 91a to 91f in the software update process of step S6 of Fig. 3.

Further, the audio compression and decompression circuit 5 compresses and decompresses the audio data according to MP3, however, the present invention is not limited to this, and it is acceptable to compress and decompress audio data according to another audio compression and decompression method such as WMA (Windows Media Audio).

Still further, the audio recording and playback apparatus 100 and the audio recording and playback process executed by the audio recording and playback apparatus have been described in the present preferred embodiment, however, the present invention is not limited to this. It is acceptable to apply the configuration of the audio recording and playback apparatus 100 and the audio recording and playback process of the present preferred embodiment to recording and playback apparatuses such as video and audio recording and playback apparatuses of a video recorder and the like, video recording and playback apparatuses of a digital still camera and the like, and a recording and playback method for the recording and playback apparatuses. In this case, it is preferable to configure the recording and playback apparatus which has a plurality of functions including a recording function, so as to include:
first storage means for previously storing the plurality of function programs for executing the plurality of functions, respectively;
second storage means for storing one function program for executing one function selected from the plurality of functions; and
controller means for executing a selected function by executing the function program stored in the second storage means. In this case, the controller means controls the function program for executing the recording function to be stored into the second storage means in the stop state of the recording and playback apparatus.

As shown in Fig. 4, in the present preferred embodiment, the turned-on keys are discriminated in the order of the recording key 10b, the playback key 10c and the power key 10a by the common control program 22b in the initial program 21, however, the present invention is not limited to this. It is allowed to have a configuration such that, by previously associating the keys 10a, 10b, 10c and 10d with respective voltage values and measuring the voltage value when a key is turned on, the type of the key is uniquely determined bases on the voltage value. With this arrangement, the discrimination of the type of the key can be increased in speed.

### INDUSTRIAL APPLICABILITY

As described above in detail, according to the recording and playback apparatus and the recording and playback method of the present invention, it is controlled so that the function program for executing the recording function is stored into the second storage means in the stop state of the recording and playback apparatus. Therefore, it is possible to execute the recording function by executing the function program for executing the recording function stored in the second storage means without reading out the function program for executing the recording function from the first storage means. For the above reasons, the time until the execution of the recording function can be suppressed to the minimum. In addition, since the second storage means stores only one function program, the capacity of the second storage means can be reduced to a size of function program that has the largest size of the plurality of function programs, and this allows the recording and playback apparatus to achieve a size reduction, power saving and a cost reduction as compared with the prior art.

### REFERENCE SIGNS LIST

- 1 ...: Microcomputer,
- 2: ROM,
- 3: RAM,
- 4: controller,
- 4c: program counter circuit,
- 5: audio compression and decompression circuit,
- 6: USB interface circuit,
- 7: microphone,
- 8: loudspeaker,
- 9: nonvolatile memory,
- 10: keypad,
- 10a: power key,
- 10b: recording key,
- 10c: playback key,
- 10d: stop key,
- 11: display,
- 12: audio data processing circuit,
- 21: initial program,
- 22, 22a, and 22b: common control program,
- 23: OS,
- 91: program storage region,
- 91a: initial program,
- 91b: recording program,
- 91c: playback program,
- 91d: menu program,
- 91e: erase program,
- 91f: USB program,
- 91g: update program,
- 92: user data storage region,
- 93: etting parameter data storage region,
- 100: audio recording and playback apparatus, and
- 200: personal computer.

## Claims

1. A recording and playback apparatus having a plurality of functions including a recording function, the recording and playback apparatus comprising:
first storage means for previously storing a plurality of function programs for executing the plurality of functions, respectively;
second storage means for storing one function program for executing one function selected from the plurality of functions; and
controller means for executing a selected function by executing the function program stored in the second storage means,
wherein the controller means controls a function program for executing the recording function to be stored into the second storage means in a stop state of the recording and playback apparatus.

2. The recording and playback apparatus as claimed in claim 1,
wherein, at a startup of the recording and playback apparatus, the controller means reads out the function program for executing the recording function from the first storage means, stores a read-out function program into the second storage means, and puts the recording and playback apparatus into the stop state.

3. The recording and playback apparatus as claimed in claim 1 or 2,
wherein, after terminating a function program for executing a function other than the recording function, the controller means erases the function program stored in the second storage means, reads out the function program for executing the recording function from the first storage means, stores a read-out function program into the second storage means, and puts the recording and playback apparatus into the stop state.

4. The recording and playback apparatus as claimed in any one of claims 1 to 3,
wherein, when the recording function is selected in the stop state, the controller means executes the function program for executing the recording function stored in the second storage means without reading out the function program for executing the recording function stored in the first storage means.

5. The recording and playback apparatus as claimed in any one of claims 1 to 4,
wherein, when a function other than the recording function is selected in the stop state, the controller means erases the function program for executing the recording function stored in the second storage means, reads out the function program for executing a selected function from the first storage means, stores a read-out function program into the second storage means, and executes the function program stored in the second storage means.

6. A recording and playback method for a recording and playback apparatus having a plurality of functions including a recording function, the recording and playback method including:
a step of previously storing a plurality of function programs for executing the plurality of functions, respectively, into first storage means;
a step of storing one function program for executing one function selected from the plurality of functions into second storage means; and
a control step of executing a selected function by executing the function program stored in the second storage means,
wherein the control step includes controlling a function program for executing the recording function to be stored into the second storage means in a stop state of the recording and playback apparatus.

7. The recording and playback method as claimed in claim 6,
wherein, at a startup of the recording and playback apparatus, the control step includes reading out the function program for executing the recording function from the first storage means, storing a read-out function program into the second storage means, and putting the recording and playback apparatus into the stop state.

8. The recording and playback method as claimed in claim 6 or 7,
wherein, after terminating a function program for executing a function other than the recording function, the control step includes erasing the function program stored in the second storage means, reading out the function program for executing the recording function from the first storage means, storing a read-out function program into the second storage means, and putting the recording and playback apparatus into the stop state.

9. The recording and playback method as claimed in any one of claims 6 to 8,
wherein, when the recording function is selected in the stop state, the control step includes executing the function program for executing the recording function stored in the second storage means without reading out the function program for executing the recording function stored in the first storage means.

10. The recording and playback method as claimed in any one of claims 6 to 9,
wherein, when a function other than the recording function is selected in the stop state, the control step includes erasing the function program for executing the recording function stored in the second storage means, reading out the function program for executing a selected function from the first storage means, storing a read-out function program into the second storage means, and executing the function program stored in the second storage means.
